(19) Europäisches Patentamt / European Patent Office / Office européen des brevets

(11) **EP 4 699 882 A1**

(12) **EUROPEAN PATENT APPLICATION**

(43) Date of publication:
**25.02.2026 Bulletin 2026/09**

(21) Application number: **25191303.4**

(22) Date of filing: **23.07.2025**

(51) International Patent Classification (IPC):
**B60W 30/18** (2012.01)

(52) Cooperative Patent Classification (CPC):
**B60W 30/18072; B60W 2520/10; B60W 2520/105;
B60W 2554/4041; B60W 2554/4042;
B60W 2554/4044**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.08.2024 JP 2024138748**

(71) Applicant: **TOYOTA JIDOSHA KABUSHIKI
KAISHA
Toyota-shi, Aichi-ken 471-8571 (JP)**

(72) Inventor: **OTAKE, Hirotada
TOYOTA-SHI, AICHI-KEN, 471-8571 (JP)**

(74) Representative: **Cabinet Beau de Loménie
103, rue de Grenelle / CS 90800
75340 Paris Cedex 07 (FR)**

(54) **VEHICLE DRIVER ASSISTANCE DEVICE, VEHICLE DRIVER ASSISTANCE METHOD, AND
NON-TRANSITORY STORAGE MEDIUM**

(57) A device (10) includes one or more processors configured to: execute control of causing a vehicle (100) to drive while repeating powering and coasting of the vehicle (100); and cancel coasting of the vehicle (100) in a case where a coasting cancellation condition is satisfied when the vehicle (100) is caused to perform coasting, the coasting cancellation condition being a condition that an adjacent vehicle (300) exists in a coasting cancellation region (AS), the adjacent vehicle (300) being another vehicle that drives on an adjacent lane (LN_N) adjacent to an own lane (LN_O) on which the vehicle (100) is driving, and the coasting cancellation region (AS) including a region of the adjacent lane (LN_N) and including a region of the adjacent lane (LN_N) within a first distance (D1) ahead from the vehicle (100) and a region of the adjacent lane (LN_N) within a second distance (D2) behind the vehicle (100).

FIG. 4

EP 4 699 882 A1

**Description**

BACKGROUND OF THE INVENTION

1. Field of the Invention

The present invention relates to a vehicle driver assistance device, a vehicle driver assistance method, and a non-transitory storage medium.

2. Description of Related Art

A vehicle driver assistance device including a control device that executes autonomous driving control of causing an own vehicle to drive while repeating powering and coasting of the own vehicle is known (see, for example, Japanese Unexamined Patent Application Publication No. 2018-134925 (JP 2018-134925 A)).

SUMMARY OF THE INVENTION

By the way, during execution of autonomous driving control of causing the own vehicle to drive while repeating powering and coasting of the own vehicle, there is a case where another vehicle (adjacent driving vehicle) driving on an adjacent lane exists near the own vehicle. In this case, there is a possibility that a situation may occur where the adjacent driving vehicle passes the own vehicle while the own vehicle is coasting, and immediately after that, the own vehicle starts powering and passes the adjacent driving vehicle. If such a situation is repeated, there is a possibility of making a driver of the adjacent driving vehicle feel irritations.

The present invention provides a vehicle driver assistance device capable of preventing a driver of an adjacent driving vehicle from feeling irritations as a result of powering and coasting of an own vehicle being repeatedly performed.

A vehicle driver assistance device according to a first aspect of the present invention includes one or more processors configured to: execute autonomous driving control of causing an own vehicle to drive while repeating powering and coasting of the own vehicle; and cancel coasting of the own vehicle in a case where a coasting cancellation condition is satisfied when the own vehicle is caused to perform coasting, the coasting cancellation condition being a condition that an adjacent driving vehicle exists in a coasting cancellation region, the adjacent driving vehicle being another vehicle that drives in the same direction as a driving direction of the own vehicle on an adjacent lane adjacent to an own lane on which the own vehicle is driving, and the coasting cancellation region including a region of the adjacent lane immediately lateral to the own vehicle and including a region of the adjacent lane within a first distance ahead from the own vehicle and a region of the adjacent lane within a second distance behind the own vehicle.

In a case where an adjacent driving vehicle exists near the own vehicle during execution of autonomous driving control, there is a possibility that a situation may occur where the adjacent driving vehicle passes the own vehicle while the own vehicle is coasting, and immediately after that, the own vehicle starts powering and passes the adjacent driving vehicle. If such a situation is repeated, there is a possibility of making a driver of the adjacent driving vehicle feel irritations.

With the vehicle driver assistance device according to the present invention, in a case where an adjacent driving vehicle exists near the own vehicle during execution of autonomous driving control (that is, in a case where the coasting cancellation condition is satisfied), coasting of the own vehicle is canceled. It is therefore possible to avoid occurrence of the situation as described above. It is therefore possible to prevent the driver of the adjacent driving vehicle from feeling irritations as a result of coasting and powering of the own vehicle being repeatedly performed.

In the above-described aspect, the coasting cancellation condition may be or may include a condition that the adjacent driving vehicle exists in the coasting cancellation region, and a driving speed of the adjacent driving vehicle is a speed within a cancellation speed range.

According to this, it is possible to determine whether or not to cancel coasting of the own vehicle while the driving speed of the adjacent driving vehicle is taken into account.

In the vehicle driver assistance device in the above-described aspect, the one or more processors may be configured to: set an upper limit and a lower limit of a driving speed of the own vehicle during execution of the autonomous driving control and stop powering of the own vehicle and start coasting of the own vehicle when the driving speed of the own vehicle reaches the upper limit as a result of the driving speed of the own vehicle increasing while the own vehicle is caused to perform powering during execution of the autonomous driving control and stop coasting of the own vehicle and start powering of the own vehicle when the driving speed of the own vehicle reaches the lower limit as a result of the driving speed of the own vehicle decreasing while the own vehicle is caused to perform coasting during execution of the autonomous driving control; and the cancellation speed range may be a range from the upper limit to the lower limit.

According to this, it is possible to cancel coasting control only when there is a relatively high possibility of making the driver of the adjacent driving vehicle feel irritations as a result of coasting and powering of the own vehicle being repeatedly performed by first autonomous driving control.

In the vehicle driver assistance device in the above-described aspect, the one or more processors may be configured not to switch a driving state of the own vehicle from a state where the own vehicle is caused to perform powering to a state where the own vehicle is caused to perform coasting in a case where a switching prohibition condition is satisfied when a switching condition is satisfied, the switching condition may be a condition of switching the driving state of the own vehicle from the state where the own vehicle is caused to perform powering to the state where the own vehicle is caused to perform coasting, the switching prohibition condition may be a condition that the adjacent driving vehicle exists in a switching prohibition region, and the switching prohibition region may include the region of the adjacent lane immediately lateral to the own vehicle and include a region of the adjacent lane within a third distance longer than the first distance ahead from the own vehicle and a region of the adjacent lane within a fourth distance longer than the second distance behind the own vehicle.

There is a case where the adjacent driving vehicle does not exist in the coasting cancellation region but exists near the coasting cancellation region during execution of autonomous driving control. In this case, there is a possibility that the adjacent driving vehicle may enter the coasting cancellation region immediately after coasting of the own vehicle is started. Then, in a case where the adjacent driving vehicle enters the coasting cancellation region, coasting of the own vehicle is canceled and powering of the own vehicle is started. This, on the contrary, increases an energy amount to be consumed to cause the own vehicle to drive.

With the vehicle driver assistance device according to the present invention, in a case where the adjacent driving vehicle does not exist in the coasting cancellation region but exists near the coasting cancellation region during execution of autonomous driving control (that is, in a case where the switching prohibition condition is satisfied), coasting of the own vehicle is not started. It is therefore possible to maintain an energy amount to be consumed to cause the own vehicle to drive at a smaller amount.

In the vehicle driver assistance device in the above-described aspect, the one or more processors may be configured to: set an upper limit and a lower limit of a driving speed of the own vehicle during execution of the autonomous driving control and stop powering of the own vehicle and start coasting of the own vehicle when the driving speed of the own vehicle reaches the upper limit as a result of the driving speed of the own vehicle increasing while the own vehicle is caused to perform powering during execution of the autonomous driving control; and stop coasting of the own vehicle and start powering of the own vehicle when the driving speed of the own vehicle reaches the lower limit as a result of the driving speed of the own vehicle decreasing while the own vehicle is caused to perform coasting during execution of the autonomous driving control; and the switching prohibition condition may be such a condition that: the adjacent driving vehicle exists in the switching prohibition region, the adjacent driving vehicle is an adjacent driving vehicle driving ahead of the own vehicle, and a driving speed of the adjacent driving vehicle is lower than an average value of the upper limit and the lower limit; or the adjacent driving vehicle exists in the switching prohibition region, the adjacent driving vehicle is an adjacent driving vehicle driving behind the own vehicle, and a driving speed of the adjacent driving vehicle is higher than the average value.

According to this, it is possible to prohibit switching of the driving control on the own vehicle from powering control to coasting control only when there is a relatively high possibility that the adjacent driving vehicle may enter the coasting cancellation region within a relatively short period of time after the driving control on the own vehicle has switched from powering control to coasting control.

In the vehicle driver assistance device in the above-described aspect, the coasting cancellation condition may be or may include a condition that a following vehicle exists in a coasting cancellation rear region, the following vehicle may be another vehicle that drives on the own lane in the same direction as a driving direction of the own vehicle, and the coasting cancellation region may include a region of the own lane within a fifth distance behind the own vehicle.

In the vehicle driver assistance device in the above-described aspect, the one or more processors may be configured not to switch a driving state of the own vehicle from a state where the own vehicle is caused to perform powering to a state where the own vehicle is caused to perform coasting in a case where a switching prohibition condition is satisfied when a switching condition is satisfied, the switching condition may be a condition for switching the driving state of the own vehicle from the state where the own vehicle is caused to perform powering to the state where the own vehicle is caused to perform coasting, the switching prohibition condition is a condition that the following vehicle exists in a switching prohibition rear region, and the switching prohibition rear region may include a region of the own lane within a sixth distance longer than the fifth distance behind the own vehicle.

A vehicle driver assistance method of autonomous driving control of causing an own vehicle to drive while repeating powering and coasting of the own vehicle according to a second aspect of the present invention includes canceling coasting of the own vehicle in a case where a coasting cancellation condition is satisfied when the own vehicle is caused to perform coasting, the coasting cancellation condition being a condition that an adjacent driving vehicle exists in a coasting cancellation region, the adjacent driving vehicle being another vehicle that drives in the same direction as a driving direction of the own vehicle on an adjacent lane adjacent to an own vehicle on which the own vehicle is driving, the coasting cancellation region including a region of the adjacent lane immediately lateral to the own vehicle and including a region of the adjacent lane within a first distance ahead from the own vehicle and a region of the adjacent lane within a second distance behind the own vehicle, and the first distance and the second distance being determined in accordance with at least a speed and acceleration of the own vehicle and a speed of the adjacent driving vehicle.

A non-transitory storage medium according to a third aspect of the present invention, the non-transitory storage medium storing a command executable by one or more processors, the command causing the one or more processors to execute a function of autonomous driving control of causing an own vehicle to drive while repeating powering and coasting of the own vehicle, the non-transitory storage medium includes canceling coasting of the own vehicle in a case where a coasting cancellation condition is satisfied when the own vehicle is caused to perform coasting, the coasting cancellation condition being a condition that an adjacent driving vehicle exists in a coasting cancellation region, the adjacent driving vehicle being another vehicle that drives in the same direction as a driving direction of the own vehicle on an adjacent lane adjacent to an own lane on which the own vehicle is driving, the coasting cancellation region including a region of the adjacent lane immediately lateral to the own vehicle and including a region of the adjacent lane within a first distance ahead from the own vehicle and a region of the adjacent lane within a second distance behind the own vehicle, and the first distance and the second distance being determined in accordance with at least a speed and acceleration of the own vehicle and a speed of the adjacent driving vehicle.

Components of the present invention are not limited to an embodiment of the present invention which will be described later with reference to the drawings. Other purposes, other features and accompanying advantages of the present invention will be easily understood from description of the embodiment of the present invention.

## BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a view illustrating a vehicle driver assistance device according to an embodiment of the present invention;
FIG. 2 is a view illustrating a scene in which a preceding vehicle exists;
FIG. 3 is a flowchart indicating a routine to be executed by the vehicle driver assistance device according to the embodiment of the present invention;
FIG. 4 is a flowchart indicating a routine to be executed by the vehicle driver assistance device according to the embodiment of the present invention;
FIG. 5 is a flowchart indicating a routine to be executed by the vehicle driver assistance device according to the embodiment of the present invention;
FIG. 6 is a view illustrating a coasting cancellation region;
FIG. 7 is a view illustrating a switching prohibition region;
FIG. 8 is a view illustrating a coasting cancellation rear region; and
FIG. 9 is a view illustrating a switching prohibition rear region.

## DETAILED DESCRIPTION OF EMBODIMENTS

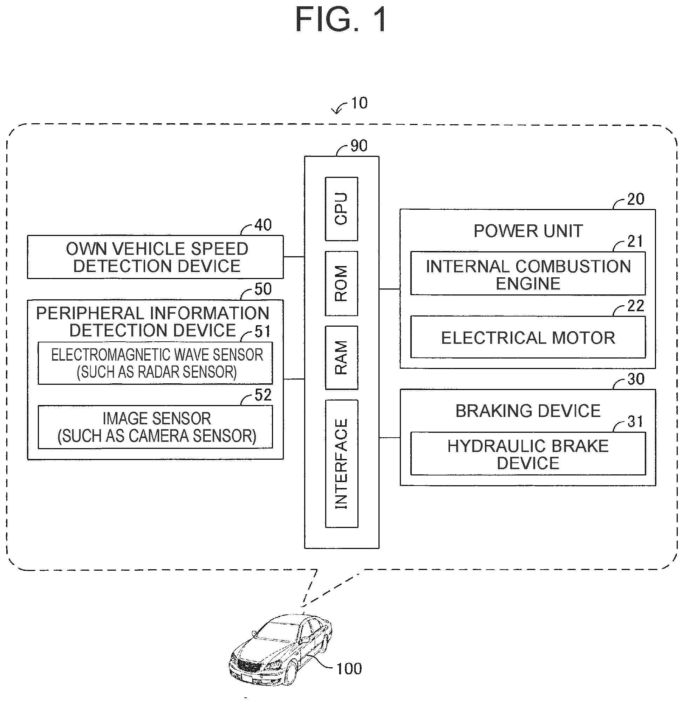

A vehicle driver assistance device, a vehicle driver assistance method and a vehicle driver assistance program according to an embodiment of the present invention will be described below with reference to the drawings. FIG. 1 illustrates a vehicle driver assistance device 10 according to the embodiment of the present invention.

The vehicle driver assistance device 10 is mounted on an own vehicle 100. Hereinafter, the vehicle driver assistance device 10 will be described using an example of a case where an operator of the own vehicle 100 is a person who gets on the own vehicle 100 and drives the own vehicle 100 (that is, a driver of the own vehicle 100). However, the operator of the own vehicle 100 may be a person who remotely drives the own vehicle 100 without getting on the own vehicle 100 (that is, a remote operator of the own vehicle 100). Further, the present invention can be also applied to a vehicle that drives by autonomous driving without the need of driving by a driver or a remote operator.

As illustrated in FIG. 1, the vehicle driver assistance device 10 includes an electronic control unit (ECU) 90 as a control device. The ECU 90 includes a microcomputer as a main part. The microcomputer includes a CPU, a ROM, a RAM, a computer-readable storage medium such as a non-volatile memory, an interface, and the like. The CPU implements various kinds of functions by executing an instruction or a program or a routine stored in the storage medium. Particularly, in the present embodiment, the vehicle driver assistance device 10 stores a program that implements various kinds of control to be executed by the vehicle driver assistance device 10 in the storage medium.

Note that in the present embodiment, the vehicle driver assistance device 10 includes only one ECU 90. However, the vehicle driver assistance device 10 may include a plurality of ECUs and may be configured such that functions of the vehicle driver assistance device 10 which will be described below are shared by the respective ECUs. Further, the vehicle driver assistance device 10 may be configured so as to be able to update the program stored in the storage medium through wireless communication (for example, the Internet communication) with external devices.

A power unit 20, a braking device 30, an own vehicle speed detection device 40, and a peripheral information detection device 50 are mounted on the own vehicle 100.

The power unit 20 is a device that generates driving force to be provided to the own vehicle 100 (particularly, drive wheels of the own vehicle 100). In the present embodiment, the power unit 20 includes an internal combustion engine 21 and an electrical motor 22. The power unit 20 is electrically connected to the ECU 90. The vehicle driver assistance device 10 can control driving force to be provided to the own vehicle 100 by controlling actuation of the internal combustion engine 21 and the electrical motor 22.

The braking device 30 is a device that provides braking force to the own vehicle 100 (particularly, wheels of the own vehicle 100). In the present embodiment, the braking device 30 includes a hydraulic brake device 31. The braking device 30 is electrically connected to the ECU 90. The vehicle driver assistance device 10 can control braking force to be provided to the own vehicle 100 by controlling actuation of the hydraulic brake device 31.

The own vehicle speed detection device 40 is a device that detects a driving speed of the own vehicle 100. The own vehicle speed detection device 40 is, for example, a wheel speed sensor provided in each wheel of the own vehicle 100. The own vehicle speed detection device 40 is electrically connected to the ECU 90. The vehicle driver assistance device 10 acquires the driving speed of the own vehicle 100 by the own vehicle speed detection device 40 as an own vehicle speed Vego.

The peripheral information detection device 50 is a device that detects peripheral information of the own vehicle 100. In the present embodiment, the peripheral information detection device 50 includes an electromagnetic wave sensor 51 and an image sensor 52. The peripheral information detection device 50 is electrically connected to the ECU 90. The electromagnetic wave sensor 51 is, for example, a radar sensor such as a millimeter wave radar. The vehicle driver assistance device 10 acquires information related to an object existing around the own vehicle 100 by the electromagnetic wave sensor 51 as peripheral information IS. Further, the image sensor 52 is, for example, a camera sensor. The vehicle driver assistance device 10 acquires image information regarding the circumference of the own vehicle 100 by the image sensor 52 as the peripheral information IS.

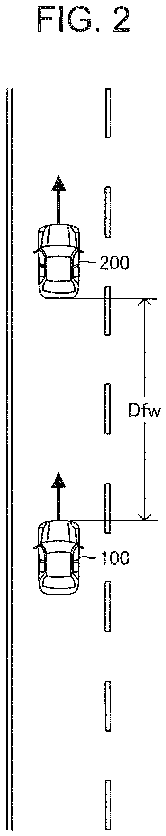

The vehicle driver assistance device 10 acquires a distance between a preceding vehicle 200 and the own vehicle 100 based on peripheral information IS as a forward inter-vehicle distance Dfw in a case where the preceding vehicle 200 exists as illustrated in FIG. 2. Note that the preceding vehicle 200 is another vehicle which drives on an own lane LN_O immediately ahead of the own vehicle 100 and which exists in a region of the own lane LN_O within a predetermined distance Dfw_th from the own vehicle 100.

Actuation of Vehicle Driver Assistance Device

Actuation of the vehicle driver assistance device 10 will be described next. The vehicle driver assistance device 10 is configured to execute autonomous driving control in response to a request from the driver of the own vehicle 100. The autonomous driving control includes first autonomous driving control and second autonomous driving control.

The vehicle driver assistance device 10 starts the first autonomous driving control in a case where execution of the first autonomous driving control is requested from the driver. The first autonomous driving control includes first vehicle speed control and first inter-vehicle distance control.

The first vehicle speed control is one of autonomous driving control of causing the own vehicle 100 to drive while repeating powering and coasting of the own vehicle 100. In the present embodiment, the first vehicle speed control is control of causing the own vehicle 100 to drive while alternatively repeating powering control and coasting control such that the own vehicle speed Vego is maintained at a speed within a predetermined vehicle speed range RV. More specifically, the first vehicle speed control is control of stopping the powering control and starting the coasting control in a case where the own vehicle speed Vego reaches an upper limit (upper limit vehicle speed Vmax) of the predetermined vehicle speed range RV as a result of the own vehicle speed Vego increasing during execution of the powering control. Further, the first vehicle speed control is control of stopping the coasting control and starting the powering control in a case where the own vehicle speed Vego reaches a lower limit (lower limit vehicle speed Vmin) of the predetermined vehicle speed range RV as a result of the own vehicle speed Vego decreasing during execution of the coasting control. Note that the first vehicle speed control is executed when the preceding vehicle 200 does not exist in a case where execution of the first autonomous driving control is requested.

The first inter-vehicle distance control is also one of the autonomous driving control of causing the own vehicle 100 to drive while repeating powering and coasting of the own vehicle 100. In the present embodiment, the first inter-vehicle distance control is control of causing the own vehicle 100 to drive while alternatively repeating the powering control and the coasting control such that the forward inter-vehicle distance Dfw is maintained at a distance within a predetermined inter-vehicle distance range RD. More specifically, the first inter-vehicle distance control is control of stopping the powering control and starting the coasting control in a case where the forward inter-vehicle distance Dfw reaches a lower limit (lower limit inter-vehicle distance Dmin) of the predetermined inter-vehicle distance range RD as a result of the forward inter-vehicle distance Dfw decreasing during execution of the powering control. Further, the first inter-vehicle distance control is control of stopping the coasting control and starting the powering control in a case where the forward inter-vehicle distance Dfw reaches an upper limit (upper limit inter-vehicle distance Dmax) of the predetermined inter-vehicle distance range RD as a result of the forward inter-vehicle distance Dfw increasing during execution of the coasting control. Note that the first inter-vehicle distance control is executed when the preceding vehicle 200 exists in a case where execution of the first autonomous driving control is requested.

Note that also when the preceding vehicle 200 exists, in a case where the upper limit vehicle speed Vmax and the lower limit vehicle speed Vmin are set as will be described later, the first inter-vehicle distance control may be configured to stop the powering control and start the coasting control in a case where the own vehicle speed Vego reaches the upper limit vehicle speed Vmax before the forward inter-vehicle distance Dfw reaches the lower limit inter-vehicle distance Dmin as a result of the forward inter-vehicle distance Dfw decreasing during execution of the powering control. Further, the first inter-vehicle distance control may be configured to stop the coasting control and start the powering control in a case where the own vehicle speed Vego reaches the lower limit vehicle speed Vmin before the forward inter-vehicle distance Dfw reaches the upper limit inter-vehicle distance Dmax as a result of the forward inter-vehicle distance Dfw increasing during execution of the coasting control.

On the other hand, the vehicle driver assistance device 10 starts the second autonomous driving control in a case where execution of the second autonomous driving control is requested from the driver. The second autonomous driving control includes second vehicle speed control and second inter-vehicle distance control.

The second vehicle speed control is control of maintaining the own vehicle speed Vego at a set vehicle speed Vset when the preceding vehicle 200 does not exist. Thus, the second vehicle speed control is so-called constant speed driving control. Note that the set vehicle speed Vset is a speed set by the driver as a target value of the own vehicle speed Vego in the autonomous driving control.

Further, the second inter-vehicle distance control is control of maintaining the forward inter-vehicle distance Dfw at a set inter-vehicle distance Dset when the preceding vehicle 200 exists. Thus, the second inter-vehicle distance control is so-called tracking driving control. The tracking driving control is control of recognizing the preceding vehicle and control of driving while maintaining the forward inter-vehicle distance at a predetermined distance based on a speed of the own vehicle. Note that the set inter-vehicle distance Dset is a distance set by the driver as a target value of the forward inter-vehicle distance Dfw in the autonomous driving control.

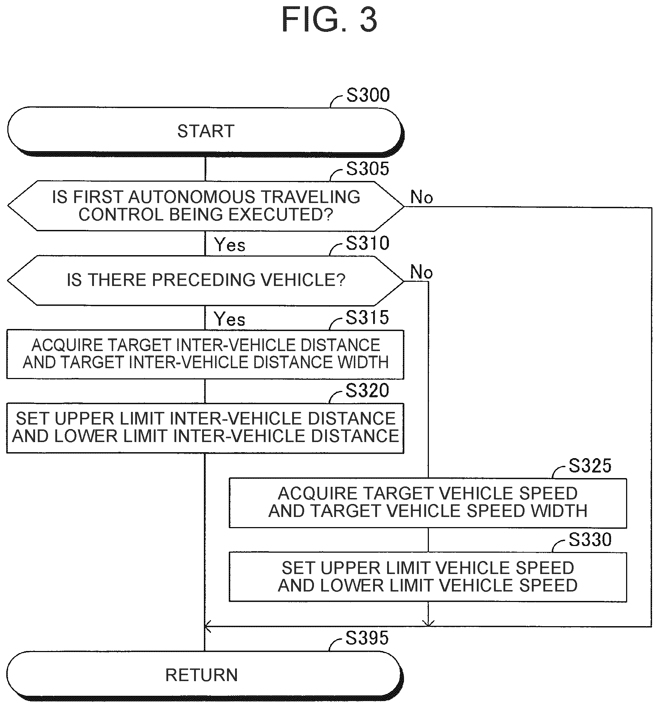

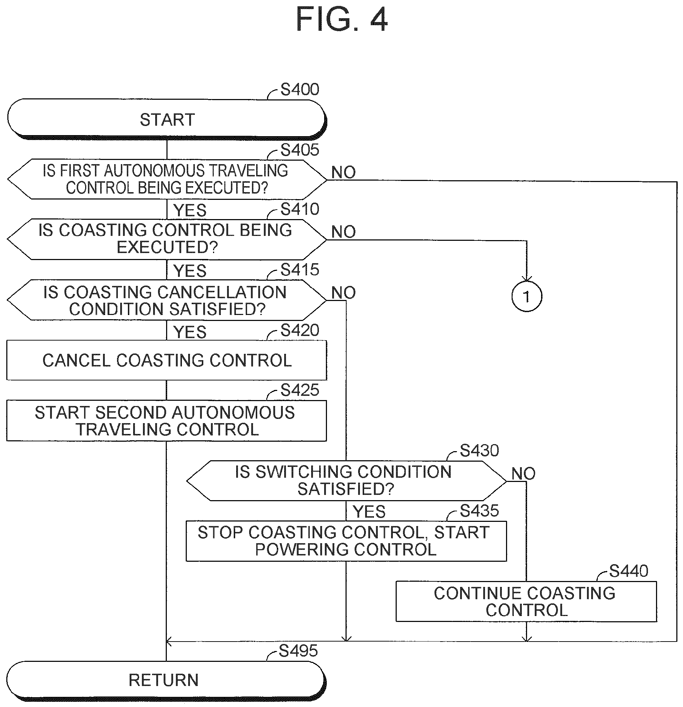

The vehicle driver assistance device 10 sets the upper limit inter-vehicle distance Dmax and the lower limit inter-vehicle distance Dmin or sets the upper limit vehicle speed Vmax and the lower limit vehicle speed Vmin in accordance with a condition that is satisfied during execution of the first autonomous driving control by executing the routine indicated in FIG. 3 at a predetermined time interval. Further, the vehicle driver assistance device 10 selectively executes the powering control and the coasting control, stops the coasting control, or prohibits switching of driving control on the own vehicle 100 from the powering control to the coasting control in accordance with a condition that is satisfied during execution of the first autonomous driving control by executing the routine indicated in FIG. 4 at a predetermined time interval.

Thus, if a predetermined timing comes, the vehicle driver assistance device 10 starts processing from step S300 in the routine indicated in FIG. 3. The processing proceeds to step S305, and it is determined whether or not the first autonomous driving control is being executed. In a case where it is determined as "No" in step S305, the vehicle driver assistance device 10 causes the processing to directly proceed to step S395 and ends the processing of the present routine once.

On the other hand, in a case where it is determined as "Yes" in step S305, the vehicle driver assistance device 10 causes the processing to proceed to step S310 and determines whether or not the preceding vehicle 200 exists. Note that the vehicle driver assistance device 10 determines whether or not the preceding vehicle 200 exists based on the peripheral information IS.

In a case where it is determined as "Yes" in step S310, the vehicle driver assistance device 10 causes the processing to proceed to step S315 and acquires a target inter-vehicle distance Dfw_tgt and a target inter-vehicle distance width Wd.

The target inter-vehicle distance Dfw_tgt may be a distance equal to the set inter-vehicle distance Dset, but in the present embodiment, is a distance obtained by subtracting a predetermined distance $\Delta D$ from the set inter-vehicle distance Dset (Dfw_tgt = Dset - $\Delta D$). The predetermined distance $\Delta D$ may be a fixed distance. Further, the predetermined distance $\Delta D$ may be a distance in accordance with the set inter-vehicle distance Dset. Still further, the target inter-vehicle distance width Wd defines a range in which the forward inter-vehicle distance Dfw is controlled during execution of the first inter-vehicle distance control. The target inter-vehicle distance width Wd may be a fixed value. Further, the target inter-vehicle distance width Wd may be a value in accordance with the set inter-vehicle distance Dset.

Then, the vehicle driver assistance device 10 causes the processing to proceed to step S320 and sets the upper limit inter-vehicle distance Dmax and the lower limit inter-vehicle distance Dmin. Then, the vehicle driver assistance device 10 causes the processing to proceed to step S395 and ends the processing of the present routine once.

In the present embodiment, the lower limit inter-vehicle distance Dmin is a target inter-vehicle distance Dfw_tgt (Dmin = Dfw_tgt). Further, the upper limit inter-vehicle distance Dmax is a distance obtained by adding the target inter-vehicle distance width Wd to the target inter-vehicle distance Dfw_tgt (Dmax = Dfw_tgt + Wd).

Note that the vehicle driver assistance device 10 may be configured to also set the upper limit vehicle speed Vmax and the lower limit vehicle speed Vmin in addition to setting the upper limit inter-vehicle distance Dmax and the lower limit inter-vehicle distance Dmin in step S320. In this case, the upper limit vehicle speed Vmax is a target vehicle speed Vtgt (Vmax = Vtgt). Further, the lower limit vehicle speed Vmin is a speed obtained by subtracting a target vehicle speed width Wv from the target vehicle speed Vtgt (Vmin = Vtgt - Wv).

On the other hand, in a case where it is determined as "No" in step S310, the vehicle driver assistance device 10 causes the processing to proceed to step S315 and acquires the target vehicle speed Vtgt and the target vehicle speed width Wv.

The target vehicle speed Vtgt may be a speed equal to the set vehicle speed Vset. In the present embodiment, the target vehicle speed Vtgt is a speed obtained by subtracting a predetermined speed $\Delta V$ from the set vehicle speed Vset (Vtgt = Vset - $\Delta V$). The predetermined speed $\Delta V$ may be a fixed speed. Further, the predetermined speed $\Delta V$ may be a speed in accordance with the set vehicle speed Vset. Still further, the target vehicle speed width Wv defines a range in which the own vehicle speed Vego is controlled during execution of the first vehicle speed control. The target vehicle speed width Wv may be a fixed value. Further, the target vehicle speed width Wv may be a value in accordance with the set vehicle speed Vset.

Then, the vehicle driver assistance device 10 causes the processing to proceed to step S330 and sets the upper limit vehicle speed Vmax and the lower limit vehicle speed Vmin. Then, the vehicle driver assistance device 10 causes the processing to proceed to step S395 and ends the processing of the present routine once.

In the present embodiment, the upper limit vehicle speed Vmax is the target vehicle speed Vtgt (Vmax = Vtgt). Further, the lower limit vehicle speed Vmin is a speed obtained by subtracting the target vehicle speed width Wv from the target vehicle speed Vtgt (Vmin = Vtgt - Wv).

Further, if a predetermined timing comes, the vehicle driver assistance device 10 starts processing from step S400 of the routine indicated in FIG. 4. The vehicle driver assistance device 10 causes the processing to proceed to step S405 and determines whether or not the first autonomous driving control is being executed. In a case where it is determined as "No" in step S405, the vehicle driver assistance device 10 causes the processing to directly proceed to step S495 and ends the processing of the present routine once.

On the other hand, in a case where it is determined as "Yes" in step S405, the vehicle driver assistance device 10 causes the processing to proceed to step S410 and determines whether or not the coasting control is being executed. In a case where it is determined as "Yes" in step S410, the vehicle driver assistance device 10 causes the processing to proceed to step S415 and determines whether or not a coasting cancellation condition C1 is satisfied.

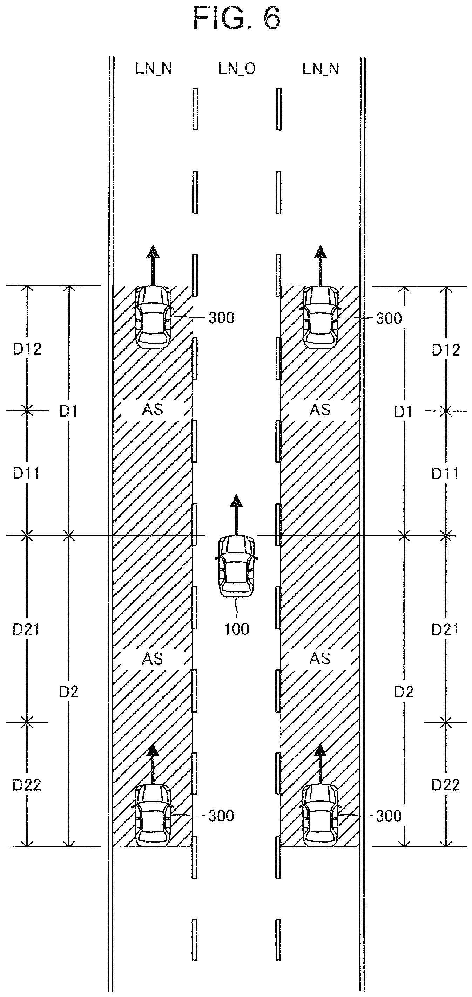

The coasting cancellation condition C1 is a condition for determining whether or not to cancel the coasting control. In the present embodiment, the coasting cancellation condition C1 is a condition that an adjacent driving vehicle 300 exists in a coasting cancellation region AS. Here, as illustrated in FIG. 6, the adjacent driving vehicle 300 is another vehicle that drives on an adjacent lane LN_N in the same direction as a driving direction of the own vehicle 100. The adjacent lane LN_N is an adjacent lane of the own lane LN_O. The own lane LN_O is a lane on which the own vehicle 100 is driving.

Further, the coasting cancellation region AS includes a region of the adjacent lane LN_N immediately lateral to the own vehicle 100 and includes a region of the adjacent lane LN_N within a first distance D1 ahead from the own vehicle 100 (particularly, a front end of the own vehicle 100) and a region of the adjacent lane LN_N within a second distance D2 behind the own vehicle 100 (particularly, the front end of the own vehicle 100).

In the present embodiment, the first distance D1 is a distance obtained by adding a first cancellation distance D12 to a first basic distance D11 (D1 = D11 + D12). In the present embodiment, the first basic distance D11 is set at a fixed distance. Further, the first cancellation distance D12 is set in accordance with the own vehicle speed Vego, the upper limit vehicle speed Vmax, acceleration Gego and the forward adjacent driving vehicle speed Vnext_fw, and is, for example, calculated from the following equation 1. Note that the acceleration Gego is acceleration of the own vehicle 100 when the own vehicle 100 drives by powering control, or acceleration of the own vehicle 100 when the own vehicle 100 drives by coasting control, and the acceleration Gego of the own vehicle 100 is a positive value. Further, the forward adjacent driving vehicle speed Vnext_fw is a driving speed of the adjacent driving vehicle 300 that is driving ahead of the own vehicle 100.

$$D12 = ((Vmax - Vego/Gego) \cdot ((Vego + Vmax)/2 - Vnext\_fw) \ldots (1)$$

Further, in the present embodiment, the second distance D2 is a distance obtained by adding a second cancellation distance D22 to a second basic distance D21 (D2 = D21 + D22). In the present embodiment, the second basic distance D21 is set at a fixed distance. Further, the second cancellation distance D22 is set in accordance with the own vehicle speed Vego, the upper limit vehicle speed Vmax, the acceleration Gego, and a rearward adjacent driving vehicle speed Vnext_rw and is, for example, calculated by the following equation 2. Note that the rearward adjacent driving vehicle speed Vnext_rw is a driving speed of the adjacent driving vehicle 300 that is driving behind the own vehicle 100.

$$D22 = ((Vmax - Vego)/Gego) \bullet (Vnext\_rw - (Vego + Vmax)/2) \ ... \ (2)$$

Note that the first distance D1 and the second distance D2 may be equal to each other. Further, the first distance D1 and the second distance D2 may be different from each other.

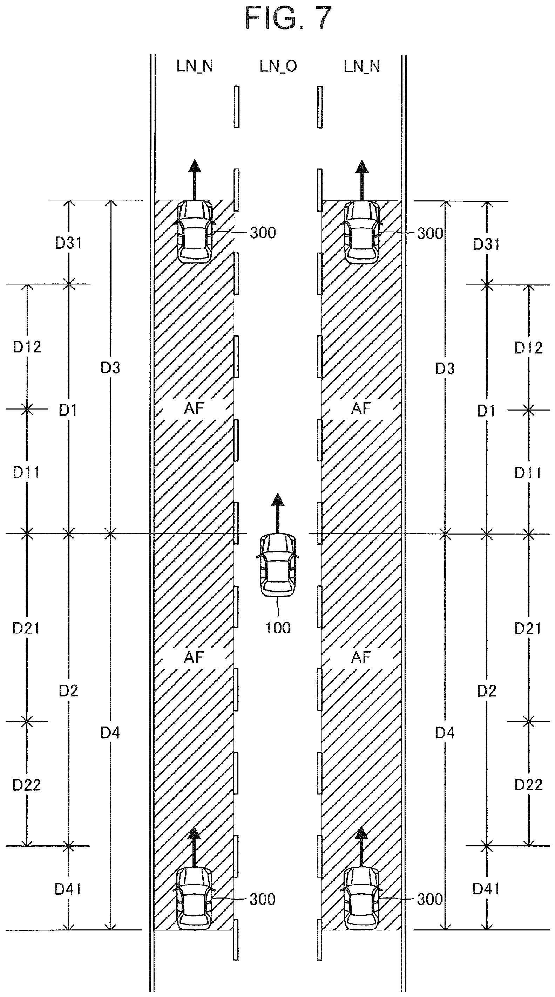

Further, in the present embodiment, a switching prohibition region AF is also set in addition to the coasting cancellation region AS. As illustrated in FIG. 7, the switching prohibition region AF includes a region of the adjacent lane LN_N immediately lateral to the own vehicle 100 and includes a region of the adjacent lane LN_N within a third distance D3 longer than the first distance D1 ahead from the own vehicle 100 (particularly, the front end of the own vehicle 100) and a region of the adjacent lane LN_N within a fourth distance D4 longer than the second distance D2 behind the own vehicle 100 (particularly, the front end of the own vehicle 100).

In the present embodiment, the third distance D3 is a distance obtained by adding a third prohibition distance D31 to the first distance D1 (D3 = D1 + D31). The third prohibition distance D31 is set in accordance with the upper limit vehicle speed Vmax, the lower limit vehicle speed Vmin, the forward adjacent driving vehicle speed Vnext_fw, and a minimum coasting period Tmin and is, for example, calculated by the following equation 3. Note that the minimum coasting period Tmin is a shortest period during which the coasting control is desired to be continued in order to minimize an energy amount to be consumed to cause the own vehicle 100 to drive in a case where the driving control on the own vehicle 100 is switched from the powering control to the coasting control.

$$D31 = - (Vnext\_fw - (Vmax + Vmin)/2) \bullet Tmin \ ... \ (3)$$

Note that in a case where the forward adjacent driving vehicle speed Vnext_fw is equal to or higher than an average own vehicle speed Vego_ave, the third prohibition distance D31 calculated by the equation 3 becomes a value equal to or less than zero. In this case, the third prohibition distance D31 is set at zero. Note that the average own vehicle speed Vego_ave represents the own vehicle speed Vego while the own vehicle 100 drives by the coasting control and is an average value of the upper limit vehicle speed Vmax and the lower limit vehicle speed Vmin (Vego_ave = (Vmax + Vmin)/2).

Further, in the present embodiment, the fourth distance D4 is a distance obtained by adding a fourth prohibition distance D41 to the second distance D2 (D4 = D2 + D41). The fourth prohibition distance D41 is set in accordance with the upper limit vehicle speed Vmax, the lower limit vehicle speed Vmin, the rearward adjacent driving vehicle speed Vnext_rw, and the minimum coasting period Tmin and is, for example, calculated by the following equation 4.

$$D41 = (Vnext\_rw - (Vmax + Vmin)/2) \bullet Tmin \ ... \ (4)$$

Note that in a case where the rearward adjacent driving vehicle speed Vnext_rw is equal to or less than the average own vehicle speed Vego_ave, the fourth prohibition distance D41 calculated by the equation 4 becomes a value equal to or less than zero. In this case, the fourth prohibition distance D41 is set at zero.

Further, the third distance D3 and the fourth distance D4 may be equal to each other. Still further, the third distance D3 and the fourth distance D4 may be different from each other.

Further, the coasting cancellation condition C1 may be a condition that the adjacent driving vehicle 300 exists in the coasting cancellation region AS, and a driving speed of the adjacent driving vehicle 300 is a speed within a cancellation speed range RS. In this case, the cancellation speed range RS is, for example, a range from the upper limit vehicle speed Vmax as an upper limit to the lower limit vehicle speed Vmin as a lower limit. In other words, the cancellation speed range RS is a range from the upper limit vehicle speed Vmax to the lower limit vehicle speed Vmin. In a case where the coasting cancellation condition C1 is set in this manner, the coasting control can be canceled only when there is a relatively high possibility of making the driver of the adjacent driving vehicle 300 feel irritations as a result of powering and coasting of the own vehicle 100 being repeatedly performed by the first autonomous driving control.

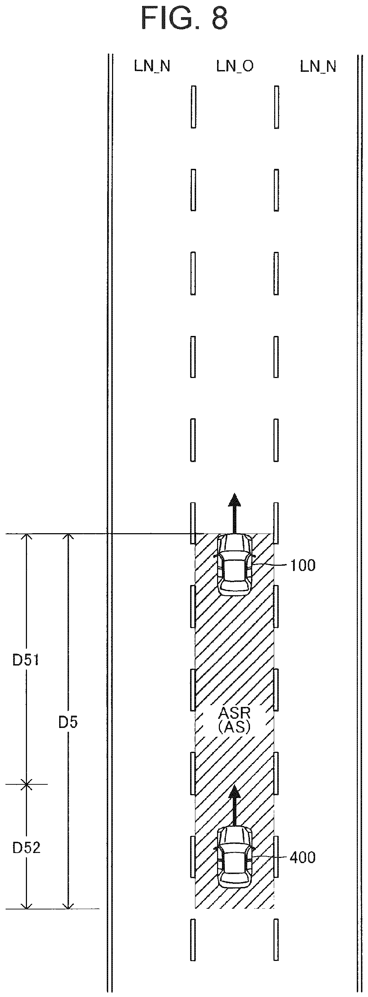

Further, the coasting cancellation region AS may include a coasting cancellation rear region ASR. As illustrated in FIG. 8, the coasting cancellation rear region ASR is a region of the own lane LN_O within a fifth distance D5 behind the own vehicle 100 (particularly, the front end of the own vehicle 100). In this case, the coasting cancellation condition C1 is a condition that the adjacent driving vehicle 300 or a following vehicle 400 exists in the coasting cancellation region AS. The following vehicle 400 is another vehicle which drives on the own lane LN_O immediately behind the own vehicle 100 and which exists in a region of the own lane LN_O within a predetermined distance Drw_th from the own vehicle 100.

In the present embodiment, the fifth distance D5 is a distance obtained by adding a fifth cancellation distance D52 to a fifth basic distance D51 (D5 = D51 + D52). In the present embodiment, the fifth basic distance D51 is set at a fixed distance. Further, the fifth cancellation distance D52 is set in accordance with the own vehicle speed Vego, the upper limit vehicle speed Vmax, the acceleration Gego and a following vehicle speed Vrw and is, for example, calculated by the following equation 5. Note that the following vehicle speed Vrw is a driving speed of the following vehicle 400.

$$D52 = ((Vmax - Vego/Gego) \bullet (Vrw - (Vego + Vmax)/2) \,...\, (5)$$

Note that the fifth distance D5 may be equal to the second distance D2. The fifth distance D5 may be different from the second distance D2.

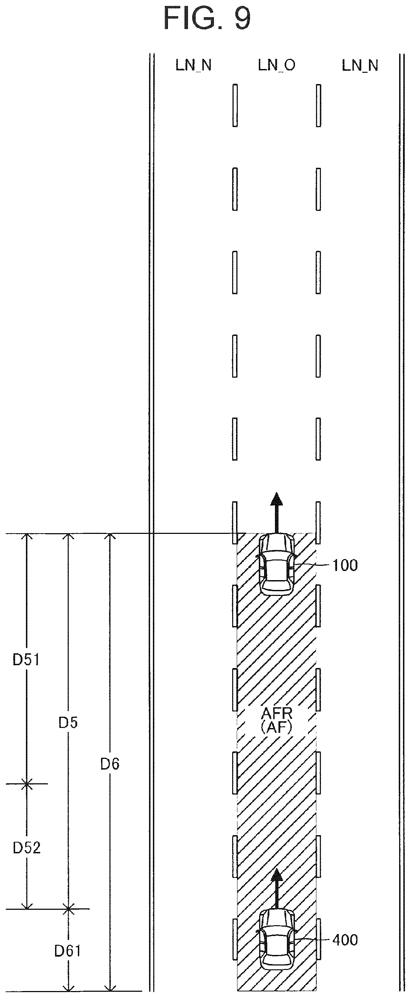

Further, the switching prohibition region AF may include a switching prohibition rear region AFR. As illustrated in FIG. 9, the switching prohibition rear region AFR is a region of the own lane LN_O within a sixth distance D6 longer than the fifth distance D5 behind the own vehicle 100 (particularly, the front end of the own vehicle 100).

Further, in the present embodiment, the sixth distance D6 is a distance obtained by adding a sixth prohibition distance D61 to the fifth distance D5 (D6 = D5 + D61). The sixth prohibition distance D61 is set in accordance with the following vehicle speed Vrw, the upper limit vehicle speed Vmax, the lower limit vehicle speed Vmin and the minimum coasting period Tmin and is, for example, calculated by the following equation 6.

$$D61 = (Vrw - (Vmax + Vmin)/2) \bullet Tmin \,...\, (6)$$

Note that in a case where the following vehicle speed Vrw is equal to or less than the average own vehicle speed Vego_ave, the sixth prohibition distance D61 calculated by the equation 6 becomes a value equal to or less than zero. In this case, the sixth prohibition distance D61 is set at zero.

Further, the sixth distance D6 may be equal to the fourth distance D4 or may be different from the fourth distance D4.

Further, the vehicle driver assistance device 10 determines whether or not the coasting cancellation condition C1 is satisfied based on the peripheral information IS.

In a case where it is determined as "Yes" in step S415, the vehicle driver assistance device 10 causes the processing to proceed to step S420 and cancels the coasting control. Then, the vehicle driver assistance device 10 causes the processing to proceed to step S425 and starts the second autonomous driving control. Then, the vehicle driver assistance device 10 causes the processing to proceed to step S495 and ends the processing of the present routine once.

In this manner, in a case where the coasting cancellation condition C1 is satisfied when the own vehicle 100 is caused to perform coasting, the vehicle driver assistance device 10 cancels coasting of the own vehicle 100.

Note that in a case where the second autonomous driving control is started in step S425, the vehicle driver assistance device 10 continues the second autonomous driving control unless execution of the first autonomous driving control is requested again from the driver.

On the other hand, in a case where it is determined as "No" in step S415, the vehicle driver assistance device 10 causes the processing to proceed to step S430 and determines whether or not a switching condition C2 is satisfied.

The switching condition C2 in step S430 is a condition that the forward inter-vehicle distance Dfw has reached the upper limit inter-vehicle distance Dmax as a result of the forward inter-vehicle distance Dfw becoming long in a case where the first inter-vehicle distance control is being executed. The switching condition C2 in step S430 is a condition that the own vehicle speed Vego has reached the lower limit vehicle speed Vmin as a result of the own vehicle speed Vego becoming lower in a case where the first vehicle speed control is being executed. Note that the vehicle driver assistance device 10 determines whether or not the switching condition C2 is satisfied based on the peripheral information IS in step S430.

In a case where it is determined as "Yes" in step S430, the vehicle driver assistance device 10 causes the processing to proceed to step S435 and stops the coasting control and starts the powering control. In other words, the vehicle driver assistance device 10 switches the driving control on the own vehicle 100 from the coasting control to the powering control. Then, the vehicle driver assistance device 10 causes the processing to proceed to step S495 and ends the processing of the present routine once.

On the other hand, in a case where it is determined as "No" in step S430, the vehicle driver assistance device 10 causes the processing to proceed to step S440 and continues the coasting control. Then, the vehicle driver assistance device 10 causes the processing to proceed to step S495 and ends the processing of the present routine once.

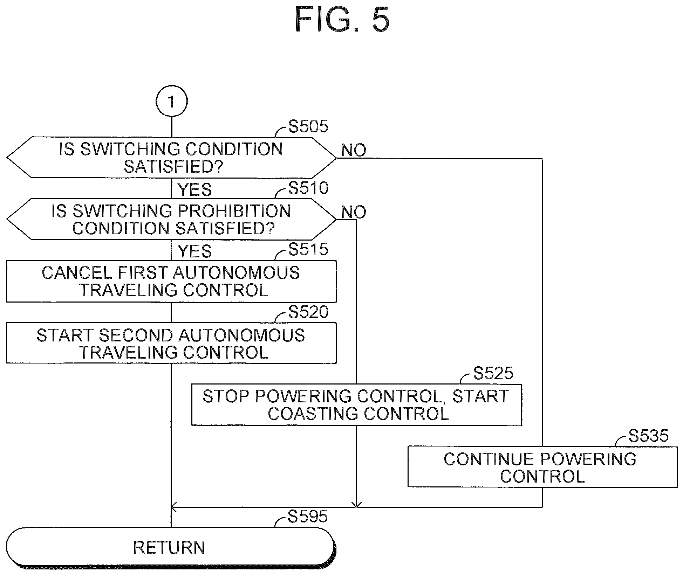

Further, in a case where it is determined as "No" in step S410, the vehicle driver assistance device 10 causes the processing to proceed to step S505 of the routine indicated in FIG. 5 and determines whether or not the switching condition C2 is satisfied. The switching condition C2 in step S505 is a condition that the forward inter-vehicle distance Dfw has reached the lower limit inter-vehicle distance Dmin as a result of the forward inter-vehicle distance Dfw becoming short in a case where the first inter-vehicle distance control is being executed. Further, the switching condition C2 in step S505 is a condition that the own vehicle speed Vego has reached the upper limit vehicle speed Vmax as a result of the own vehicle speed Vego increasing in a case where the first vehicle speed control is being executed. Note that the vehicle driver assistance device 10 determines whether or not the switching condition C2 is satisfied based on the peripheral information IS in step S505.

In a case where it is determined as "Yes" in step S505, the vehicle driver assistance device 10 causes the processing to proceed to step S510 and determines whether or not a switching prohibition condition C3 is satisfied.

The switching prohibition condition C3 is a condition for determining whether or not to switch the driving control on the own vehicle 100 from the powering control to the coasting control, and in the present embodiment, is a condition that the adjacent driving vehicle 300 exists in the switching prohibition region AF.

Note that the switching prohibition condition C3 may be a condition that the adjacent driving vehicle 300 exists in the switching prohibition region AF, the adjacent driving vehicle 300 is the adjacent driving vehicle 300 that drives ahead of the own vehicle 100, and the driving speed of the adjacent driving vehicle 300 (forward adjacent driving vehicle speed $Vnext\_fw$) is lower than the average own vehicle speed $Vego\_ave$, or the adjacent driving vehicle 300 exists in the switching prohibition region AF, the adjacent driving vehicle 300 is the adjacent driving vehicle 300 that drives behind the own vehicle 100, and the driving speed of the adjacent driving vehicle 300 (rearward adjacent driving vehicle speed $Vnext\_rw$) is higher than the average own vehicle speed $Vego\_ave$.

In a case where the switching prohibition condition C3 is set in this manner, switching of the driving control on the own vehicle 100 from the powering control to the coasting control can be prohibited only when there is a relatively high possibility that the adjacent driving vehicle 300 may enter the coasting cancellation region AS within a relatively short period of time after the driving control on the own vehicle 100 is switched from the powering control to the coasting control.

Note that the vehicle driver assistance device 10 determines whether or not the switching prohibition condition C3 is satisfied based on the peripheral information IS.

In a case where it is determined as "Yes" in step S510, the vehicle driver assistance device 10 causes the processing to proceed to step S515 and cancels the first autonomous driving control. In other words, the vehicle driver assistance device 10 prohibits switching of the driving control on the own vehicle 100 from the powering control to the coasting control. Then, the vehicle driver assistance device 10 causes the processing to proceed to step S520 and starts the second autonomous driving control. Then, the vehicle driver assistance device 10 causes the processing to proceed to step S595 and ends the processing of the present routine once.

In this manner, in a case where the switching prohibition condition C3 is satisfied when the switching condition C2 is satisfied, the vehicle driver assistance device 10 does not switch a driving state of the own vehicle 100 from a state where the own vehicle 100 is caused to perform powering to a state where the own vehicle 100 is caused to perform coasting. The switching condition C2 is a condition for switching the driving state of the own vehicle 100 from the state where the own vehicle 100 is caused to perform powering to the state where the own vehicle 100 is caused to perform coasting.

Note that in a case where the second autonomous driving control is started in step S520, the vehicle driver assistance device 10 continues the second autonomous driving control unless execution of the first autonomous driving control is requested again from the driver.

On the other hand, in a case where it is determined as "No" in step S510, the vehicle driver assistance device 10 causes the processing to proceed to step S525 and stops the powering control and starts the coasting control. In other words, the vehicle driver assistance device 10 switches the driving control on the own vehicle 100 from the powering control to the coasting control. Then, the vehicle driver assistance device 10 causes the processing to proceed to step S595 and ends the processing of the present routine once.

Further, in a case where it is determined as "No" in step S505, the vehicle driver assistance device 10 causes the processing to proceed to step S535 and continues the powering control. Then, the vehicle driver assistance device 10 causes the processing to proceed to step S595 and ends the processing of the present routine once.

The actuation of the vehicle driver assistance device 10 has been described above.

In this manner, the vehicle driver assistance device 10 is configured to set the upper limit (upper limit vehicle speed $Vmax$) and the lower limit (lower limit vehicle speed $Vmin$) of the driving speed of the own vehicle 100 in a case where the preceding vehicle 200 does not exist during execution of the autonomous driving control unless the coasting cancellation condition C1 and the switching prohibition condition C3 are satisfied. Further, the vehicle driver assistance device 10 is configured to stop powering of the own vehicle 100 and start coasting of the own vehicle 100 when the driving speed of the own vehicle 100 reaches the above-described upper limit (upper limit vehicle speed $Vmax$) as a result of the driving speed of the own vehicle 100 increasing while the own vehicle 100 is caused to perform powering in a case where the preceding vehicle 200 does not exist during execution of the autonomous driving control unless the coasting cancellation condition C1 and the switching prohibition condition C3 are satisfied. Further, the vehicle driver assistance device 10 is configured to stop coasting of the own vehicle 100 and start powering of the own vehicle 100 when the driving speed of the own vehicle 100 reaches the above-described lower limit (lower limit vehicle speed $Vmin$) as a result of the driving speed of the own vehicle 100 decreasing while the own vehicle 100 is caused to perform coasting in a case where the preceding vehicle 200 does not exist during execution of the autonomous driving control unless the coasting cancellation condition C1 and the switching prohibition condition C3 are satisfied.

Further, the vehicle driver assistance device 10 is configured to set the upper limit (upper limit inter-vehicle distance Dmax) and the lower limit (lower limit inter-vehicle distance Dmin) of the forward inter-vehicle distance Dfw in a case where the preceding vehicle 200 exists during execution of the autonomous driving control unless the coasting cancellation condition C1 and the switching prohibition condition C3 are satisfied. Still further, the vehicle driver assistance device 10 is configured to stop powering of the own vehicle 100 and start coasting of the own vehicle 100 when the forward inter-vehicle distance Dfw reaches the above-described lower limit (lower limit inter-vehicle distance Dmin) as a result of the forward inter-vehicle distance Dfw becoming short while the own vehicle 100 is caused to perform powering in a case where the preceding vehicle 200 exists during execution of the autonomous driving control unless the coasting cancellation condition C1 and the switching prohibition condition C3 are satisfied. Yet further, the vehicle driver assistance device 10 is configured to stop coasting of the own vehicle 100 and start powering of the own vehicle 100 when the forward inter-vehicle distance Dfw reaches the above-described upper limit (upper limit inter-vehicle distance Dmax) as a result of the forward inter-vehicle distance Dfw becoming long while the own vehicle 100 is caused to perform coasting in a case where the preceding vehicle 200 exists during execution of the autonomous driving control unless the coasting cancellation condition C1 and the switching prohibition condition C3 are satisfied.

Further, with the vehicle driver assistance device 10, it is possible to prevent the driver of the adjacent driving vehicle 300 from feeling irritations as a result of coasting and powering of the own vehicle 100 being repeatedly performed.

In other words, in a case where the adjacent driving vehicle 300 exists near the own vehicle 100 during execution of the first autonomous driving control, there is a possibility that a situation may occur where the adjacent driving vehicle 300 passes the own vehicle 100 while the own vehicle 100 is coasting, and immediately after that, powering of the own vehicle 100 is started, and the own vehicle 100 passes the adjacent driving vehicle 300. If such a situation is repeated, there is a possibility of making the driver of the adjacent driving vehicle 300 feel irritations.

With the vehicle driver assistance device 10, in a case where the adjacent driving vehicle 300 exists near the own vehicle 100 during execution of the first autonomous driving control (that is, in a case where the coasting cancellation condition C1 is satisfied), coasting of the own vehicle 100 is canceled. It is therefore possible to avoid occurrence of the situation as described above. It is therefore possible to prevent the driver of the adjacent driving vehicle 300 from feeling irritations as a result of coasting and powering of the own vehicle 100 being repeatedly performed.

Further, with the vehicle driver assistance device 10, it is possible to maintain an energy amount to be consumed to cause the own vehicle 100 to drive at a smaller amount.

In other words, there is a case where the adjacent driving vehicle 300 does not exist in the coasting cancellation region AS but exists near the coasting cancellation region AS during execution of the first autonomous driving control. In this case, there is a possibility that the adjacent driving vehicle 300 may enter the coasting cancellation region AS immediately after coasting of the own vehicle 100 is started. Then, in a case where the adjacent driving vehicle 300 enters the coasting cancellation region AS, coasting of the own vehicle 100 is canceled, and powering of the own vehicle 100 is started. This, on the contrary, increases an energy amount to be consumed to cause the own vehicle 100 to drive.

With the vehicle driver assistance device 10, coasting of the own vehicle 100 is not started in a case where the adjacent driving vehicle 300 does not exist in the coasting cancellation region AS but exists near the coasting cancellation region AS (that is, in a case where the switching prohibition condition C3 is satisfied) during execution of the first autonomous driving control. It is therefore possible to maintain an energy amount to be consumed to cause the own vehicle 100 to drive at a smaller amount.

Note that the present invention is not limited to the above-described embodiment, and various modifications can be employed within the scope of the present invention.

## Claims

1.  A vehicle driver assistance device (10) comprising one or more processors configured to:

    execute autonomous driving control of causing an own vehicle (100) to drive while repeating powering and coasting of the own vehicle (100); and
    cancel coasting of the own vehicle (100) in a case where a coasting cancellation condition is satisfied when the own vehicle (100) is caused to perform coasting,
    the coasting cancellation condition being a condition that an adjacent driving vehicle (300) exists in a coasting cancellation region (AS), the adjacent driving vehicle (300) being another vehicle that drives in the same direction as a driving direction of the own vehicle (100) on an adjacent lane (LN_N) adjacent to an own lane (LN_O) on which the own vehicle (100) is driving, and
    the coasting cancellation region (AS) including a region of the adjacent lane (LN_N) immediately lateral to the own vehicle (100) and including a region of the adjacent lane (LN_N) within a first distance (D1) ahead from the own vehicle (100) and a region of the adjacent lane (LN_N) within a second distance (D2) behind the own vehicle (100).

2. The vehicle driver assistance device (10) according to claim 1, wherein the coasting cancellation condition includes a condition that the adjacent driving vehicle (300) exists in the coasting cancellation region (AS), and a driving speed of the adjacent driving vehicle (300) is a speed within a cancellation speed range (RS).

3. The vehicle driver assistance device (10) according to claim 2, wherein:

the one or more processors are configured to

set an upper limit and a lower limit of a driving speed of the own vehicle (100) during execution of the autonomous driving control and
stop powering of the own vehicle (100) and start coasting of the own vehicle (100) when the driving speed of the own vehicle (100) reaches the upper limit as a result of the driving speed of the own vehicle (100) increasing while the own vehicle (100) is caused to perform powering during execution of the autonomous driving control and
stop coasting of the own vehicle (100) and start powering of the own vehicle (100) when the driving speed of the own vehicle (100) reaches the lower limit as a result of the driving speed of the own vehicle (100) decreasing while the own vehicle (100) is caused to perform coasting during execution of the autonomous driving control; and

the cancellation speed range (RS) is a range from the upper limit to the lower limit.

4. The vehicle driver assistance device (10) according to any one of claims 1 to 3, wherein:

the one or more processors are configured not to switch a driving state of the own vehicle (100) from a state where the own vehicle (100) is caused to perform powering to a state where the own vehicle (100) is caused to perform coasting in a case where a switching prohibition condition is satisfied when a switching condition is satisfied;
the switching condition is a condition of switching the driving state of the own vehicle (100) from the state where the own vehicle is caused to perform powering to the state where the own vehicle is caused to perform coasting;
the switching prohibition condition is a condition that the adjacent driving vehicle (300) exists in a switching prohibition region (AF); and
the switching prohibition region (AF) includes the region of the adjacent lane (LN_N) immediately lateral to the own vehicle (100) and includes a region of the adjacent lane (LN_N) within a third distance (D3) longer than the first distance (D1) ahead from the own vehicle (100) and a region of the adjacent lane (LN_N) within a fourth distance (D4) longer than the second distance (D2) behind the own vehicle (100).

5. The vehicle driver assistance device (10) according to claim 4, wherein:

the one or more processors are configured to

set an upper limit and a lower limit of a driving speed of the own vehicle (100) during execution of the autonomous driving control and
stop powering of the own vehicle (100) and start coasting of the own vehicle (100) when the driving speed of the own vehicle (100) reaches the upper limit as a result of the driving speed of the own vehicle (100) increasing while the own vehicle (100) is caused to perform powering during execution of the autonomous driving control and
stop coasting of the own vehicle (100) and start powering of the own vehicle (100) when the driving speed of the own vehicle (100) reaches the lower limit as a result of the driving speed of the own vehicle (100) decreasing while the own vehicle (100) is caused to perform coasting during execution of the autonomous driving control; and

the switching prohibition condition is such a condition that:

the adjacent driving vehicle (300) exists in the switching prohibition region (AF),
the adjacent driving vehicle (300) is the adjacent driving vehicle (300) driving ahead of the own vehicle (100), and
a driving speed of the adjacent driving vehicle (300) is lower than an average value of the upper limit and the lower limit; or
the adjacent driving vehicle (300) exists in the switching prohibition region (AF),

the adjacent driving vehicle (300) is the adjacent driving vehicle (300) driving behind the own vehicle (100), and

a driving speed of the adjacent driving vehicle (300) is higher than the average value.

6. The vehicle driver assistance device (10) according to any one of claims 1 to 5, wherein:

the coasting cancellation condition includes a condition that a following vehicle (400) exists in a coasting cancellation rear region (ASR);

the following vehicle (400) is another vehicle that drives on the own lane (LN_O) in the same direction as a driving direction of the own vehicle (100); and

the coasting cancellation region (ASR) includes a region of the own lane (LN_O) within a fifth distance (D5) behind the own vehicle (100).

7. The vehicle driver assistance device (10) according to claim 6, wherein:

the one or more processors are configured not to switch a driving state of the own vehicle (100) from a state where the own vehicle (100) is caused to perform powering to a state where the own vehicle (100) is caused to perform coasting in a case where a switching prohibition condition is satisfied when a switching condition is satisfied;

the switching condition is a condition for switching the driving state of the own vehicle (100) from the state where the own vehicle is caused to perform powering to the state where the own vehicle is caused to perform coasting;

the switching prohibition condition is a condition that the following vehicle (400) exists in a switching prohibition rear region (AFR); and

the switching prohibition rear region (AFR) includes a region of the own lane (LN_O) within a sixth distance (D6) longer than the fifth distance (D5) behind the own vehicle (100).

8. A vehicle driver assistance method of autonomous driving control of causing an own vehicle (100) to drive while repeating powering and coasting of the own vehicle (100), the vehicle driver assistance method comprising

canceling coasting of the own vehicle (100) in a case where a coasting cancellation condition is satisfied when the own vehicle (100) is caused to perform coasting,

the coasting cancellation condition being a condition that an adjacent driving vehicle (300) exists in a coasting cancellation region (AS), the adjacent driving vehicle (300) being another vehicle that drives in the same direction as a driving direction of the own vehicle (100) on an adjacent lane (LN_N) adjacent to an own lane (LN_O) on which the own vehicle (100) is driving,

the coasting cancellation region (AS) including a region of the adjacent lane (LN_N) immediately lateral to the own vehicle (100) and including a region of the adjacent lane (LN_N) within a first distance (D1) ahead from the own vehicle (100) and a region of the adjacent lane (LN_N) within a second distance (D2) behind the own vehicle (100), and

the first distance and the second distance being determined in accordance with at least a speed and acceleration of the own vehicle (100) and a speed of the adjacent driving vehicle (300).

9. A non-transitory storage medium storing a command executable by one or more processors, the command causing the one or more processors to execute a function of autonomous driving control of causing an own vehicle (100) to drive while repeating powering and coasting of the own vehicle (100), the non-transitory storage medium comprising

canceling coasting of the own vehicle (100) in a case where a coasting cancellation condition is satisfied when the own vehicle (100) is caused to perform coasting,

the coasting cancellation condition being a condition that an adjacent driving vehicle (300) exists in a coasting cancellation region (AS), the adjacent driving vehicle (300) being another vehicle that drives in the same direction as a driving direction of the own vehicle (100) on an adjacent lane (LN_N) adjacent to an own lane (LN_O) on which the own vehicle (100) is driving,

the coasting cancellation region (AS) including a region of the adjacent lane (LN_N) immediately lateral to the own vehicle (100) and including a region of the adjacent lane (LN_N) within a first distance (D1) ahead from the own vehicle (100) and a region of the adjacent lane (LN_N) within a second distance (D2) behind the own vehicle (100), and

the first distance and the second distance being determined in accordance with at least a speed and acceleration of the own vehicle (100) and a speed of the adjacent driving vehicle (300).

EP 4 699 882 A1

# FIG. 1

```
                          ⌒10
                        ⌒90
```

OWN VEHICLE SPEED
DETECTION DEVICE  ⌒40

PERIPHERAL INFORMATION
DETECTION DEVICE  ⌒50  ⌒51

ELECTROMAGNETIC WAVE SENSOR
(SUCH AS RADAR SENSOR)  ⌒51

IMAGE SENSOR
(SUCH AS CAMERA SENSOR)  ⌒52

CPU

ROM

RAM

INTERFACE

POWER UNIT  ⌒20

INTERNAL COMBUSTION
ENGINE  ⌒21

ELECTRICAL MOTOR  ⌒22

BRAKING DEVICE  ⌒30

HYDRAULIC BRAKE
DEVICE  ⌒31

⌒100

# FIG. 2

# FIG. 3

S300
START

S305
IS FIRST AUTONOMOUS TRAVELING CONTROL BEING EXECUTED? — No

Yes

S310
IS THERE PRECEDING VEHICLE? — No

Yes

S315
ACQUIRE TARGET INTER-VEHICLE DISTANCE AND TARGET INTER-VEHICLE DISTANCE WIDTH

S320
SET UPPER LIMIT INTER-VEHICLE DISTANCE AND LOWER LIMIT INTER-VEHICLE DISTANCE

S325
ACQUIRE TARGET VEHICLE SPEED AND TARGET VEHICLE SPEED WIDTH

S330
SET UPPER LIMIT VEHICLE SPEED AND LOWER LIMIT VEHICLE SPEED

S395
RETURN

16

# FIG. 4

```
                                    ┌S400
        ╭──────────────────────────────╮
        │          START               │
        ╰──────────────────────────────╯
                      │           ┌S405
        ╱─────────────────────────────╲  NO
       ╱ IS FIRST AUTONOMOUS TRAVELING  ╲──────────────────────────────┐
       ╲  CONTROL BEING EXECUTED?       ╱                              │
        ╲─────────────────────────────╱                               │
                   │ YES      ┌S410                                    │
        ╱─────────────────────────────╲  NO                           │
       ╱  IS COASTING CONTROL BEING     ╲──────────────┐              │
       ╲       EXECUTED?                ╱              │              │
        ╲─────────────────────────────╱               │              │
                   │ YES      ┌S415                    │              │
        ╱─────────────────────────────╲  NO            │          ╭───────╮
       ╱  IS COASTING CANCELLATION      ╲──────┐       │          │   1   │
       ╲   CONDITION SATISFIED?         ╱      │       │          ╰───────╯
        ╲─────────────────────────────╱       │       │
                   │ YES      ┌S420            │       │
        ┌─────────────────────────────┐       │       │
        │   CANCEL COASTING CONTROL    │       │       │
        └─────────────────────────────┘       │       │
                   │          ┌S425            │       │
        ┌─────────────────────────────┐       │       │
        │   START SECOND AUTONOMOUS    │       │       │
        │     TRAVELING CONTROL        │       │       │
        └─────────────────────────────┘       │       │
                   │                  ┌S430    │       │
                   │   ╱───────────────────────────╲  NO
                   │  ╱  IS SWITCHING CONDITION      ╲──────────┐
                   │  ╲      SATISFIED?              ╱          │
                   │   ╲───────────────────────────╱           │
                   │            │ YES      ┌S435                │
                   │   ┌─────────────────────────────┐         │
                   │   │ STOP COASTING CONTROL, START │         │
                   │   │     POWERING CONTROL         │         │
                   │   └─────────────────────────────┘         │
                   │                           ┌S440           │
                   │              ┌─────────────────────────────┐
                   │              │   CONTINUE COASTING          │
                   │              │        CONTROL               │
                   │              └─────────────────────────────┘
                   │            │            │                  │
        ╭──────────────────────────────╮
        │         RETURN               │
        ╰──────────────────────────────╯
                ┌S495
```

# FIG. 5

```
                    ( 1 )
                                          ⌒S505
         ╱ IS SWITCHING CONDITION  ╲         NO
         ╲      SATISFIED?          ╱
                    │ YES        ⌒S510
         ╱ IS SWITCHING PROHIBITION ╲        NO
         ╲  CONDITION SATISFIED?     ╱
                    │ YES      ⌒S515
         ┌──────────────────────────┐
         │ CANCEL FIRST AUTONOMOUS   │
         │    TRAVELING CONTROL      │
         └──────────────────────────┘
                              ⌒S520
         ┌──────────────────────────┐
         │ START SECOND AUTONOMOUS   │
         │    TRAVELING CONTROL      │
         └──────────────────────────┘
                                              ⌒S525
              ┌──────────────────────────────────┐
              │ STOP POWERING CONTROL, START      │
              │       COASTING CONTROL            │
              └──────────────────────────────────┘
                                                          ⌒S535
                        ┌──────────────────────────────┐
                        │ CONTINUE POWERING            │
                        │      CONTROL                 │
                        └──────────────────────────────┘
                              ⌒S595
         ╭──────────────────────────╮
         │         RETURN           │
         ╰──────────────────────────╯
```

18

# FIG. 6

# FIG. 7

# FIG. 8

# FIG. 9

Europäisches
Patentamt
European
Patent Office
Office européen
des brevets

# EUROPEAN SEARCH REPORT

**Application Number**

EP 25 19 1303

## DOCUMENTS CONSIDERED TO BE RELEVANT

| Category | Citation of document with indication, where appropriate, of relevant passages | Relevant to claim |
|---|---|---|
| X | DE 10 2022 111310 A1 (BAYERISCHE MOTOREN WERKE AG [DE]) 9 November 2023 (2023-11-09) | 1,2,4,8,9 |
| A | * paragraphs [0008] - [0017], [0038] - [0048] * * claims 1-4 * | 3,5-7 |
| A | KR 2022 0165202 A (HYUNDAI MOTOR CO LTD [KR]; KIA CORP [KR]) 14 December 2022 (2022-12-14) * paragraph [0024] * | 1-9 |
| A | US 2018/273047 A1 (WANG YAN [US]) 27 September 2018 (2018-09-27) * paragraph [0044] * | 1-9 |

**CLASSIFICATION OF THE APPLICATION (IPC)**

INV.
B60W30/18

**TECHNICAL FIELDS SEARCHED (IPC)**

B60W

The present search report has been drawn up for all claims

| Place of search | Date of completion of the search | Examiner |
|---|---|---|
| Munich | 1 December 2025 | Müller-Nagy, Andrea |

EPO FORM 1503 03.82 (P04C01)

## ANNEX TO THE EUROPEAN SEARCH REPORT
## ON EUROPEAN PATENT APPLICATION NO.

EP 25 19 1303

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2025

| Patent document cited in search report | Publication date | Patent family member(s) | Publication date |
|---|---|---|---|
| DE 102022111310 A1 | 09-11-2023 | CN 119156317 A<br>DE 102022111310 A1<br>WO 2023213555 A1 | 17-12-2024<br>09-11-2023<br>09-11-2023 |
| KR 20220165202 A | 14-12-2022 | CN 115434818 A<br>KR 20220165202 A<br>US 11491983 B1 | 06-12-2022<br>14-12-2022<br>08-11-2022 |
| US 2018273047 A1 | 27-09-2018 | CN 108657161 A<br>DE 102018107040 A1<br>GB 2562850 A<br>RU 2018109918 A<br>US 2018273047 A1 | 16-10-2018<br>27-09-2018<br>28-11-2018<br>23-09-2019<br>27-09-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018134925 A